# EUROPÄISCHE PATENTSCHRIFT

(11) **EP 3 545 579 B1**
(45) Veröffentlichungstag und Bekanntmachung des Hinweises auf die Patenterteilung: **27.05.2020**
(21) Anmeldenummer: 18703511.8
(22) Anmeldetag: 24.01.2018
(51) Int. Cl.: H01M 8/0276, H01M 8/0286, H01M 8/1018, H01M 8/241

(54) **BIPOLARPLATTEN-DICHTUNGSANORDNUNG SOWIE BRENNSTOFFZELLENSTAPEL MIT EINER SOLCHEN**
BIPOLAR PLATE/SEAL ARRANGEMENT AND ALSO FUEL CELL STACK COMPRISING SAME
SYSTÈME D'ÉTANCHÉITÉ DE PLAQUES BIPOLAIRES ET EMPILEMENT DE PILE À COMBUSTIBLE MUNI DUDIT SYSTÈME D'ÉTANCHÉITÉ

(30) Priorität: 24.01.2017 DE 102017101276
(43) Veröffentlichungstag der Anmeldung: 02.10.2019
(73) Patentinhaber: Audi AG, 85045 Ingolstadt (DE); Volkswagen AG, 38440 Wolfsburg (DE)
(72) Erfinder: BACH, Peter, Burnaby, British Columbia V5J 5J8 (CA); DESOUZA, Andrew, Burnaby, British Columbia V5J 5J8 (CA); STEWART, Ian, Burnaby, British Columbia V5J 5J8 (CA)
(86) Internationale Anmeldenummer: PCT/EP2018/051642
(87) Internationale Veröffentlichungsnummer: WO 2018/138107

(56) Entgegenhaltungen:
- WO-A1-2008/029243
- DE-A1-102004 033 821
- DE-A1-102013 208 839
- US-A1- 2004 247 981
- US-A1- 2006 131 819

## Beschreibung

Die Erfindung betrifft eine Bipolarplatten-Dichtungsanordnung für eine Brennstoffzelle beziehungsweise einen Brennstoffzellenstapel. Die Erfindung betrifft weiterhin eine Brennstoffzelle beziehungsweise einen Brennstoffzellenstapel mit einer solchen Bipolarplatten-Dichtungsanordnung.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für *membrane electrode assembly*), die ein Gefüge aus einer ionenleitenden (meist protonenleitenden) Membran und zwei beidseitig an der Membran angeordneten katalytischen Elektroden (Anode und Kathode) ist. Letztere umfassen zumeist kohlenstoffgeträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel angeordneter MEA gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ →2 H⁺+ 2e⁻). Über die Membran (Elektrolyt), welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

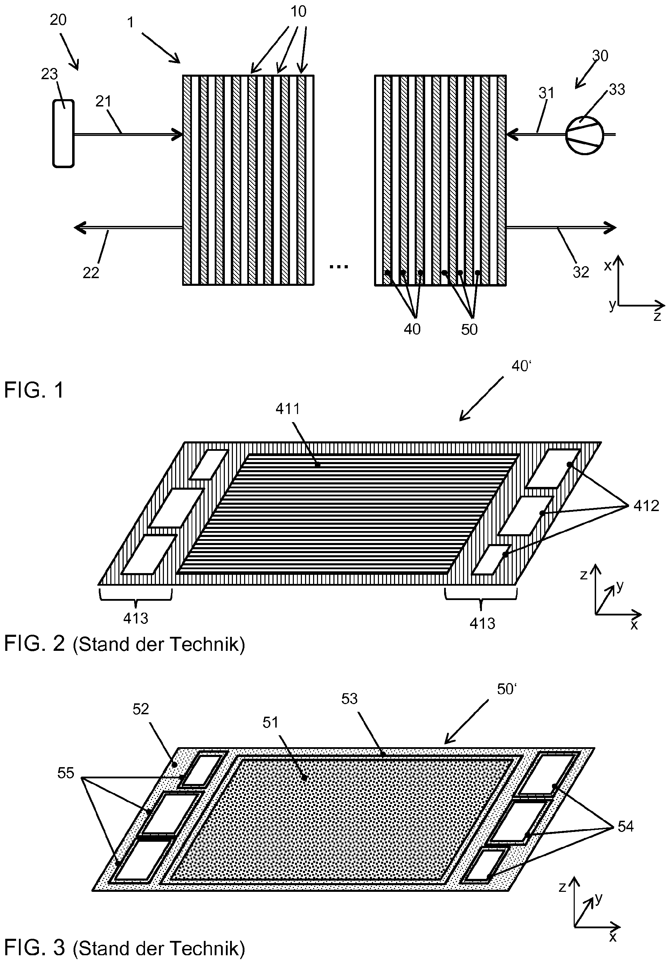

Zwischen den Bipolarplatten und den Membran-Elektroden-Anordnungen von Brennstoffzellen müssen Dichtungen vorhanden sein, um die Anoden- und Kathodenräume nach außen fluiddicht zu dichten und somit einen Austritt von den Reaktantenmedien (Anodenbeziehungsweise Kathodenbetriebsmedium) zu verhindern. Zu diesem Zweck sind Dichtungen vorgesehen, die einerseits die aktiven Bereiche und andererseits die Versorgungsöffnungen von Bipolarplatte beziehungsweise Membran-Elektroden-Anordnungen, die im Brennstoffzellenstapel fluchtend zu Hauptversorgungskanälen gestapelt sind, umlaufen. Es sind verschiedene Dichtungskonzepte bekannt. In einigen Ansätzen sind die umlaufenden Dichtungen auf der Bipolarplatte angespritzt. Ferner sind Lösungen bekannt, bei denen das MEA-Gefüge aus Membran und Elektroden von einem stabilisierenden Rahmen umgeben ist und die Dichtungen auf diesen angespritzt sind. Ein weiterer Ansatz sieht vor, dass das MEA-Gefüge aus Membran und Elektroden von einem Dichtungsrahmen eines elastischen Materials mittels eines Spitzgießverfahrens (LIM für *liquid injection molding*) umspritzt wird (siehe Figur 3). Dabei entsteht eine elastische flexible und elektrisch isolierende Rahmenstruktur, in der die Versorgungsöffnungen und Dichtungslippen für die Versorgungsöffnungen und den chemisch aktiven Bereich integral ausgebildet sind. Obwohl dieses Design kompakt und wirtschaftlich attraktiv ist, ist die Flexibilität des Dichtungsrahmens insofern nachteilig, dass sie die Ausrichtung beim Zusammenbau des Stapels aufgrund der mangelnden Steifigkeit erschwert und somit zu Fehlausrichtungen der Zellen führen kann. Zudem kann das Material nicht für die unterschiedlichen Aufgaben, umfassend Dichten und Isolieren, optimiert werden. Außerdem führen große Dichtungsanordnungen aufgrund ihrer thermischen Ausdehnung beziehungsweise Kontraktion zu Problemen bei dem Spritzgießprozess und während ihres Betriebs.

DE 10 2012 020 947 A1 offenbart eine Membran-Elektroden-Anordnung für eine Brennstoffzelle. Die Membran-Elektroden-Anordnung weist eine Dichtung auf, welche beidseitig der Membran-Elektroden-Anordnung angeordnete Teilabschnitte umfasst. Die Druckschrift offenbart, dass vorzugsweise ein chemisch aktiver Bereich der Membran-Elektroden-Einheit, welcher im Betrieb mit den Betriebsmedien beaufschlagt wird, von der Dichtung umlaufend umschlossen ist. Auch WO 2008/029243 A1 beschreibt eine Polymerelektrolytmembran, in der Dichtungen, welche den aktiven Bereich umlaufen, integriert sind.

DE 10 2013 208 839 A1 beschreibt eine Bipolarplatte, die außerhalb des Strömungsfeldes und somit auch im Bereich ihrer beiden Versorgungsbereiche eine durchgehende elektrisch isolierende Beschichtung aufweist. Auf der Bipolarplatte sind ferner Dichtungen aufgebracht, die die Versorgungsöffnungen und das Strömungsfeld umlaufen.

Aus US 2004/0247981 A1 ist eine aus Anodenplatte und Kathodenplatte zusammengesetzte Bipolarplatte bekannt, die auf einer ihrer Außenseite eine elektrisch isolierende Schicht aufweist sowie Dichtungen, welche die Versorgungsöffnungen und das Strömungsfeld der Bipolarplatte umlaufen. Die Dichtungen sind auf der der isolierenden Schicht gegenüberliegenden Seiten der Bipolarplatte in entsprechende Nuten angeordnet und durchdringen die Bipolarplatte punktuell.

US 206/0131819 A1 DE 10 2004 033 821 A1 offenbaren jeweils eine Bipolarplatten-Dichtungsanordnung, umfassend eine Bipolarplatte sowie eine Dichtungsanordnung mit einer, beide Versorgungsbereiche der Bipolarplatte bedeckenden, elektrisch isolierenden Schicht mit Aussparungen, die mit Versorgungsöffnungen der Bipolarplatte korrespondieren. Die Dichtungsanordnung umfasst ferner für jede Aussparung eine diese umlaufende Dichtung sowie eine das Strömungsfeld der Bipolarplatte umlaufende Dichtung.

Der Erfindung liegt nun die Aufgabe zugrunde, ein Dichtungskonzept für eine Brennstoffzelle zur Verfügung zu stellen, das die geschilderten Probleme überwindet.

Diese Aufgabe wird durch eine Bipolarplatten-Dichtungsanordnung sowie eine Brennstoffzelle mit den Merkmalen der unabhängigen Ansprüche gelöst. Bevorzugte Ausgestaltungen der Erfindung ergeben sich aus den in den Unteransprüchen genannten Merkmalen.

Die erfindungsgemäße Bipolarplatten-Dichtungsanordnung für eine Brennstoffzelle umfasst:
- eine Bipolarplatte, aufweisend
   - ein Strömungsfeld für ein Reaktantenmedium auf zumindest einer der beiden Hauptseiten der Bipolarplatte sowie
   - zumindest zwei, jeweils seitlich benachbart zum Strömungsfeld angeordnete Versorgungsbereiche, in den Versorgungsöffnungen zur Zu- und Abführung des Reaktantenmediums und optional zur Zu- und Abführung eines Kühlmittels angeordnet sind, und
- zumindest eine Dichtungsanordnung, aufweisend
   - für jeden Versorgungsbereich der Bipolarplatte jeweils eine elektrisch isolierende Schicht, die den Versorgungsbereich zumindest abschnittsweise bedeckt und mit Aussparungen aufweist, die mit den Versorgungsöffnungen der Bipolarplatte korrespondieren, sowie
   - für jede Aussparung eine diese umlaufende Dichtung, wobei die Dichtungsanordnung keine das Strömungsfeld der Bipolarplatte umlaufende Dichtung aufweist.

Gemäß der Erfindung sind die Dichtungen für die Versorgungsöffnungen somit der Bipolarplatte zugeordnet (statt etwa der Membran-Elektroden-Anordnung). Dabei ist die erfindungsgemäße Dichtungsanordnung im Bereich des Versorgungsbereichs der Bipolarplatte, also des nicht aktiven Bereichs, in dem die Versorgungsöffnungen angeordnet sind, angeordnet und vorzugsweise an diesem fixiert. Dies erlaubt, die Dichtungen für die Versorgungsöffnungen von der Membran-Elektroden-Anordnung zu entfernen und somit den einleitend erläuterten flexiblen Dichtungsrahmen der Membran-Elektroden-Anordnung zu vermeiden, wodurch die geschilderten Probleme bei dem Ausrichten der Komponenten während des Stapelzusammenbaus gelöst werden.

Im Rahmen der Erfindung wird unter dem Begriff "Reaktantenmedium" das Anoden- und das Kathodenbetriebsmedium verstanden, beispielsweise Wasserstoff und Luft. In der Regel weist die Bipolarplatte für jedes Reaktantenmedium zumindest zwei Versorgungsöffnungen auf, nämlich eine zur Zuführung und eine zur Abführung des Reaktantenmediums. Zudem kann die Bipolarplatte noch entsprechende Versorgungsöffnungen für ein Kühlmittel aufweisen. Vorzugsweise weist die Dichtungsanordnung für sämtliche der vorhandenen Versorgungsöffnungen jeweils eine korrespondierende Aussparung und jeweils eine umlaufende Dichtung auf. In der Regel weist die Bipolarplatte auf jeder ihrer beiden Hauptseiten mehrere, häufig zwei Versorgungsbereiche auf, die jeweils seitlich des Strömungsfelds und damit des chemisch aktiven Bereichs der Brennstoffzelle angeordnet sind. Beispielsweise dient ein erster Versorgungsbereich der Anordnung von Versorgungsöffnungen für die Zuführung von Rektantenmedien und gegebenenfalls Kühlmittel und ein zweiter Versorgungsbereich der Anordnung von Versorgungsöffnungen für deren Abführung. Dabei ist für sämtliche auf einer Hauptseite der Bipolarplatte vorhandene Versorgungsbereiche jeweils eine Dichtungsanordnung vorgesehen. Weiter kann die zumindest eine Dichtungsanordnung auf beiden Hauptseiten der Bipolarplatte vorgesehen sein. Wenn jedoch sich die Membran-Elektroden-Anordnung in bevorzugter Ausgestaltung nicht über die Versorgungsbereiche der Bipolarplatte erstreckt, also im Wesentlichen nur über den aktiven Bereich, ist vorzugsweise die zumindest eine Dichtungsanordnung nur auf einer der beiden Hauptseiten der Bipolarplatte vorgesehen.

Im Rahmen der Erfindung wird unter mit Versorgungsöffnungen der Bipolarplatte "korrespondierenden" Aussparungen der Dichtungsanordnung verstanden, dass die Aussparungen jeweils einen mit den Versorgungsöffnungen im Wesentlichen gleichen Zuschnitt aufweisen und an gleicher Position, also deckungsgleich, mit diesen angeordnet sind.

Gemäß einer ersten bevorzugten Ausgestaltung der erfindungsgemäßen Bipolarplatten-Dichtungsanordnung bestehen die elektrisch isolierende Schicht und die Dichtung der Dichtungsanordnung aus dem gleichen Material, das beispielsweise elastisch sein kann. Besonders bevorzugt sind sie in diesem Fall einstückig, also integral aus einem Werkstoff ausgebildet. Vorteil dieser Ausgestaltung ist, dass die Dichtungsanordnung in nur einem Herstellungsprozess besonders wirtschaftlich gefertigt werden kann.

Im Rahmen dieser Ausgestaltung ist bevorzugt, dass die elektrisch isolierende Schicht und die Dichtung mit einem Spritzgießverfahren auf die Bipolarplatte aufgebracht sind, also angespritzt sind. Insbesondere kann hier das sogenannte LIM-Verfahren genutzt werden (für *liquid injection molding*). Bei einem Spritzgießverfahren wird die fließfähige Reaktionsmischung für das herzustellende elastische Material in ein Spritzgießformwerkzeug eingespritzt, in welches die Bipolarplatte eingelegt ist. Dabei füllt die Reaktionsmischung die Hohlräume des Formwerkzeugs in Kontakt mit der eingelegten Bipolarplatte aus und die Polymerisation wird thermisch oder durch einen chemischen Initiator gestartet. Nach Abschluss der Reaktion wird das Formwerkzeug geöffnet und das hergestellte Bauteil entformt. Vorteil ist hier, dass es zu einer unmittelbaren Ausbildung einer stoffschlüssigen Verbindung zwischen Bipolarplatte und elektrisch isolierender Schicht kommt.

Gemäß einer alternativen Ausgestaltung ist die elektrisch isolierende Schicht der Dichtungsanordnung als eine mit der Dichtung verbundene Trägerfolie ausgebildet. Die Trägerfolie kann insbesondere mittels eines Klebstoffs mit der Bipolarplatte, insbesondere mit ihrem Versorgungsbereich, befestigt sein. In dieser Ausführung ist die Dichtung bevorzugt mit einem Spritzgießverfahren auf die Trägerfolie aufgebracht, wofür die vorstehenden Ausführungen entsprechend gelten. Vorteil dieser Ausgestaltung ist, dass Trägerfolie und Dichtung aus unterschiedlichen Materialien ausgebildet ein können und somit für ihre jeweilige Funktionen, nämlich der elektrischen Isolierung einerseits und der fluiddichten Abdichtung andererseits, optimiert werden können. Zudem kann die Trägerfolie mit einer höheren Steifigkeit hergestellt werden, wodurch der Montageprozess des Brennstoffzellenstapels weiter erleichtert wird.

Gemäß einer Abwandlung der letztgenannten Ausgestaltung der Erfindung sind beidseitig der Trägerfolie Dichtungen auf dieser aufgebracht. In dieser Abwandlung wird eine solche doppelseitige Dichtung ohne Klebstoff auf der Bipolarplatte angeordnet.

Erfindungsgemäß weist die Dichtungsanordnung keine das Strömungsfeld der Bipolarplatte umlaufende Dichtung auf. Vielmehr ist diese in diesem Fall der Membran-Elektroden-Anordnung zugeordnet. Somit wird die Funktion der Abdichtung der Versorgungsöffnungen auf die Bipolarplatte verlagert, während die Funktion der Dichtung des aktiven Bereichs durch die mit einer entsprechenden Dichtung versehene Membran-Elektroden-Anordnung erfüllt. Diese Ausführung verringert die Komplexität der Dichtungsanordnung und erleichtert den Zusammenbau des Brennstoffzellenstapels.

Die Dichtung der erfindungsgemäßen Dichtungsanordnung und gegebenenfalls die elektrisch isolierende Schicht, sofern diese nicht als Trägerfolie ausgebildet ist, sind aus einem elektrisch isolierenden, Polymerwerkstoff ausgebildet, der vorzugsweise elastisch ist. Hier kommen insbesondere Silikone, Kautschuke und andere Elastomere oder thermoplastisch-elastomere Materialien infrage.

Die Trägerfolie kann insbesondere aus einem elektrisch isolierenden thermoplastischen oder duroplastischen Polymerwerkstoff hergestellt sein.

Ein weiterer Aspekt der vorliegenden Erfindung betrifft einen Brennstoffzellenstapel, umfassend zumindest zwei Bipolarplatten-Dichtungsanordnungen gemäß der vorliegenden Erfindung sowie jeweils eine sich zwischen zwei benachbarten Strömungsfeldern zweier Bipolarplatten-Dichtungsanordnungen erstreckende Membran-Elektroden-Anordnung.

Der Brennstoffzellenstapel ist somit aus n Membran-Elektroden-Anordnungen und (n+1) Bipolarplatten-Dichtungsanordnungen aufgebaut, wobei die beiden äußersten Bipolarplatten-Dichtungsanordnungen in der Regel nur auf ihrer nach innen liegenden Hauptseite ein Strömungsfeld aufweisen und auch als Monopolarplatten bezeichnet werden.

Es ist bevorzugt vorgesehen, dass sich die Membran-Elektroden-Anordnung nicht über den Versorgungsbereich der Bipolarplatten-Dichtungsanordnung erstreckt, also im Wesentlichen ausschließlich über deren Strömungsfeld. In einem solchen Brennstoffzellenstapel kontaktiert somit eine Dichtungsanordnung einer ersten Bipolarplatten-Dichtungsanordnung einen Versorgungsbereich einer Bipolarplatte einer benachbarten zweiten Bipolarplatten-Dichtungsanordnung. Da somit zwischen jeweils zwei benachbarten Versorgungsbereichen zweier Bipolarplatten eine Dichtungsanordnung angeordnet ist, kommt es zu einer zuverlässigen Abdichtung der entsprechenden Versorgungsöffnungen.

Vorzugsweise weist die Membran-Elektroden-Anordnung des Stapels eine (vorzugsweise elastische) Dichtung auf, die ihren katalytisch aktiven Bereich und damit das Strömungsfeld der benachbarten Bipolarplatten-Dichtungsanordnung umläuft. Dabei ist die den aktiven Bereich umlaufende Dichtung bevorzugt an die Membran-Elektroden-Anordnung angeformt, insbesondere mittels eines Spritzgießprozesses.

Die den aktiven Bereich der Membran-Elektroden-Anordnung umlaufende Dichtung kann aus gleichen Materialien wie die Dichtungen für die Versorgungsöffnungen der Bipolarplatten-Dichtungsanordnung hergestellt sein.

Ein weiterer Aspekt der Erfindung betrifft ein Brennstoffzellensystem, das einen Brennstoffzellenstapel gemäß der Erfindung aufweist. Insbesondere weist das Brennstoffzellensystem neben dem Brennstoffzellenstapel eine Anodenversorgung und eine Kathodenversorgung mit den entsprechenden Peripheriekomponenten auf.

Ein weiterer Aspekt der Erfindung betrifft ein Fahrzeug, das ein Brennstoffzellensystem mit einem erfindungsgemäßen Brennstoffzellenstapel aufweist. Bei dem Fahrzeug handelt es sich vorzugsweise um ein Elektrofahrzeug, bei dem eine von dem Brennstoffzellensystem erzeugte elektrische Energie der Versorgung eines Elektrotraktionsmotors und/oder einer Traktionsbatterie dient.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Brennstoffzellensystem;
- Figur 2: eine Bipolarplatte gemäß Stand der Technik;
- Figur 3: eine Membran-Elektroden-Anordnung gemäß Stand der Technik;
- Figur 4: eine Bipolarplatten-Dichtungsanordnung gemäß einer ersten Ausgestaltung der Erfindung: (A) perspektivische Explosionsdarstellung, (B) perspektivische Draufsicht, (C) Schnittansicht gemäß Schnittebene A-A;
- Figur 5: eine Membran-Elektroden-Anordnung gemäß einer Ausgestaltung der Erfindung, und
- Figur 6: eine Bipolarplatten-Dichtungsanordnung gemäß einer zweiten Ausgestaltung der Erfindung: (A) perspektivische Explosionsdarstellung, (B) perspektivische Draufsicht, (C) Schnittansicht gemäß Schnittebene A-A nach Figur 4B

Figur 1 zeigt ein stark vereinfachtes Brennstoffzellensystem. Das Brennstoffzellensystem ist Teil eines nicht weiter dargestellten Fahrzeugs, insbesondere eines Elektrofahrzeugs, das einen Elektrotraktionsmotor aufweist, der durch das Brennstoffzellensystem mit elektrischer Energie versorgt wird.

Das Brennstoffzellensystem umfasst als Kernkomponente einen Brennstoffzellenstapel 1, der eine Vielzahl von abwechselnd in Stapelrichtung z gestapelten Bipolarplatten-Dichtungsanordnungen 40 und Membran-Elektroden-Anordnungen 50 aufweist. Jeweils eine Membran-Elektroden-Anordnung 50 und zwei daran anschließende Halbseiten einer Bipolarplatten-Dichtungsanordnung 40 bilden eine Brennstoffzelle (Einzelzelle) 10 aus. Üblicherweise sind mehrere hundert Einzelzellen 10 zu einem Brennstoffzellenstapel 1 zusammengefasst und elektrisch miteinander in Reihe geschaltet.

Um den Brennstoffzellenstapel 1 mit den Betriebsmedien zu versorgen, weist das Brennstoffzellensystem einerseits eine Anodenversorgung 20 und andererseits eine Kathodenversorgung 30 auf. Die Anodenversorgung 20 umfasst einen Anodenversorgungspfad 21, welcher der Zuführung eines Anodenbetriebsmediums (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Die Anodenversorgung 20 umfasst ferner einen Anodenabgaspfad 22, der das Anodenabgas aus den Anodenräumen 12 über einen Anodenauslass des Brennstoffzellenstapels 10 abführt. Die Kathodenversorgung 30 umfasst einen Kathodenversorgungspfad 31, welcher den Kathodenräumen 13 des Brennstoffzellenstapels 10 ein sauerstoffhaltiges Kathodenbetriebsmedium zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt. Zur Förderung und Verdichtung des Kathodenbetriebsmediums ist in dem Kathodenversorgungspfad 31 ein Verdichter 33 angeordnet.

Figur 2 zeigt eine Bipolarplatte 40' gemäß Stand der Technik. Die Bipolarplatte 40' weist zwei Hauptseiten auf, auf denen jeweils ein Strömungsfeld 411, bestehend aus einer Vielzahl von Strömungskanälen, angeordnet ist. Die Strömungsfelder 411 dienen der Zuführung und Verteilung eines Reaktantenmediums zu den katalytischen Elektroden (Anode beziehungsweise Kathode) der benachbarten Membran-Elektroden-Anordnung 50. Dabei wird ein Anodenbetriebsmedium über ein auf der Anodenseite der Bipolarplatte 40' angeordnetes Strömungsfeld 411 der Anode der MEA 50 und ein Kathodenbetriebsmedium zu der Kathode der MEA 50 geführt. Die Bipolarplatte 40' weist ferner zwei beidseitig zum Strömungsfeld 411 benachbarte nicht-aktive Versorgungsbereiche 413 auf, in denen verschiedene Versorgungsöffnungen 412 angeordnet sind. Üblicherweise sind für jedes Reaktantenmedium zumindest eine Versorgungsöffnung 412 zur Zuführung und eine Versorgungsöffnung zur Abführung des Mediums vorgesehen. Zudem ist im Inneren der Bipolarplatte 40' häufig ein Kühlmittelfeld ausgebildet, durch das ein Kühlmittel zur Abführung der Brennstoffzellenreaktionswärme geführt werden kann. In diesem Fall weist die Bipolarplatte 40' auch für das Kühlmittel jeweils eine zu- und eine abführende Versorgungsöffnung 412 auf.

Eine Membran-Elektroden-Anordnung 50' gemäß Stand der Technik zeigt Figur 3. Die Membran-Elektroden-Anordnung 50' weist in ihrem zentralen Abschnitt eine Polymerelektrolytmembran (hier nicht sichtbar) auf, bei der es sich um ein Ionen leitendes, insbesondere Protonen leitendes Polymer, beispielsweise ein unter dem Handelsnamen Nafion vertriebenes Produkt, handeln kann. Beidseitig an der Polymerelektrolytmembran ist jeweils eine katalytische Elektrode 51 angeordnet, nämlich eine Anode auf einer ersten Seite und eine Kathode auf der zweiten Seite der Membran. Die katalytischen Elektroden 51 können als beidseitige katalytische Beschichtungen der Membran ausgeführt sein oder als eigenständige Schichten, beispielsweise katalytisch beschichtete Trägerschichten, die an der Membran angeordnet werden. Beispielsweise umfassen die katalytischen Elektroden 51 jeweils ein katalytisch aktives Material, insbesondere Platin allein oder als Legierung mit weiteren Metallen, das in Form einer sehr feinen partikulären Verteilung auf einem elektrisch leitfähigen Trägermaterial geträgert vorliegt. Als Trägermaterial kommen insbesondere Kohlenstoff basierte Materialien zum Einsatz. Der zentrale Bereich der Membran-Elektroden-Anordnung 50', an dem die katalytischen Elektroden 51 vorhanden sind, wird auch als aktiver Bereich bezeichnet, da hier die Brennstoffzellenreaktionen stattfinden.

Die Membran-Elektroden-Anordnung 50' gemäß Stand der Technik weist ferner einen elastischen Dichtungsrahmen 52 auf, der die katalytische Elektrode 51 umgebend an das Gefüge aus Membran und Elektroden 51 angespritzt ist. In dem Dichtungsrahmen 51 sind Aussparungen 54 ausgebildet, die mit den Versorgungsöffnungen 412 der Bipolarplatte 40' in Form und Position korrespondieren. Die Aussparungen 54 umlaufend sind in den elastischen Dichtungsrahmen 52 ferner elastische Dichtungen 55 ausgebildet. Die Dichtungen 55 umlaufen jede einzelne Aussparung 54 und haben üblicherweise die Form von Wülsten.

Werden die herkömmlichen Bipolarplatten 40' und Membran-Elektroden-Anordnungen 50' gemäß den Figuren 2 und 3 aufeinander gestapelt, so bilden die Versorgungsöffnungen 412 und Aussparungen 54 Versorgungskanäle aus, die den Brennstoffzellenstapel 1 in seiner Stapelrichtung z durchsetzen.

Im Betrieb des Brennstoffzellenstapels 1 wird über den Anodenversorgungspfad 21 dem Stapel 1 das Anodenbetriebsmedium, insbesondere Wasserstoff, zugeführt. Der Wasserstoff tritt durch die entsprechenden Versorgungskanäle des Stapels und wird über das anodenseitige Strömungsfeld 411 der Bipolarplatte 40' der anodischen Elektrode 51 der Membran-Elektroden-Anordnung 50' zugeführt und über diese verteilt. Hier erfolgt eine katalytische Dissoziation und Oxidation von Wasserstoff H₂ zu Protonen H⁺ unter Abgabe von Elektronen, die über einen äußeren Stromkreis des Brennstoffzellenstapels abgeführt werden. Auf der anderen Seite wird über den Kathodenversorgungspfad 31 das Kathodenbetriebsmedium, insbesondere Luft, dem Stapel 1 zugeführt und über die entsprechenden Versorgungskanäle und dem kathodenseitigen Strömungsfeld 411 der Bipolarplatte 40' in die einzelnen Zellen verteilt und der kathodischen Elektrode 51 der Membran-Elektroden-Anordnung 50' zugeführt. Die anodenseitig gebildeten Protonen H⁺ diffundieren über die Polymerelektrolytmembran auf die Kathodenseite der Brennstoffzelle 10. Hier reagieren die Protonen mit dem zugeführten Luftsauerstoff an dem katalytischen Metall der kathodischen Elektrode 51 unter Aufnahme von den über den äußeren Stromkreis zugeführten Elektronen zu Wasser, welches über den Kathodenabgaspfad 32 mit dem Reaktionsgas aus der Brennstoffzelle abgeführt wird. Durch den so erzeugten elektrischen Stromfluss kann ein elektrischer Verbraucher, beispielsweise ein Traktionsmotor eines Elektrofahrzeugs oder eine Batterie, mit Strom versorgt werden.

Problematisch an der herkömmlichen Bipolarplatte 40' gemäß Figur 2 und der herkömmlichen Membran-Elektroden-Anordnung 50' gemäß Figur 3 ist einerseits, dass der flexible elastische Dichtungsrahmen 52 das Ausrichten der Einzelkomponenten beim Zusammenbau des Brennstoffzellenstapels erschwert. Somit kann es zu lateralen Verschiebungen der Membran-Elektroden-Anordnung 50' gegenüber der Bipolarplatte 40' kommen. Problembehaftet ist ferner das thermische Ausdehnungsverhalten des relativ großflächigen elastischen Dichtungsrahmens 52 sowohl bei dessen Herstellung im Spritzgießverfahren als auch während des Betriebs in der Brennstoffzelle.

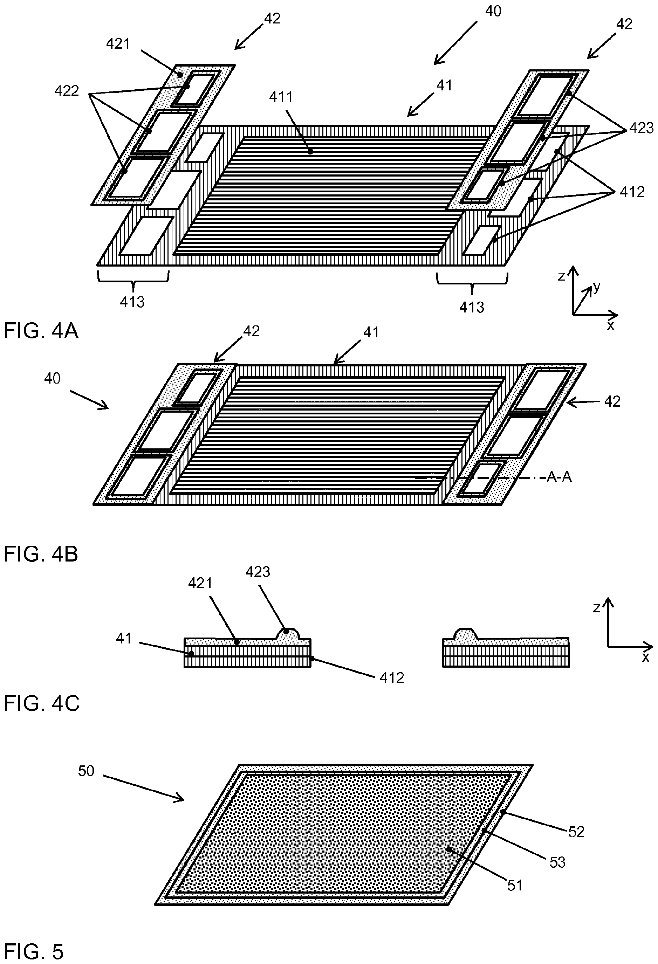

Figur 4 zeigt eine Bipolarplatten-Dichtungsanordnung 40 gemäß einer ersten Ausgestaltung der vorliegenden Erfindung. Die erfindungsgemäße Bipolarplatten-Dichtungsanordnung 40 weist eine Bipolarplatte 41 auf, die im Wesentlichen der Bipolarplatte 40' gemäß Figur 2 entspricht und für welche die gleichen Ausführungen gelten. Insbesondere weist die Bipolarplatte 41 auf beiden ihrer Hauptseiten jeweils ein Strömungsfeld 411 für jeweils ein Reaktantenmedium auf. Ferner weist die Bipolarplatte 41 zwei Versorgungsbereiche 413 auf, die benachbart zum Strömungsfeld 411 angeordnet sind und in denen Versorgungsöffnungen 412 zur Zu- und Abführung der Reaktantenmedien und des Kühlmittels angeordnet sind.

Die erfindungsgemäße Bipolarplatten-Dichtungsanordnung 40 umfasst ferner zwei Dichtungsanordnungen 42. Jede der Dichtungsanordnungen 42 weist eine elektrisch isolierende Schicht 421 auf, welche die Versorgungsbereiche 413 der Bipolarplatte 41 bedeckt. In der elektrisch isolierenden Schicht 421 sind Aussparungen 422 ausgebildet, die mit den Versorgungsöffnungen 412 der Bipolarplatte 41 bezüglich ihrer Form und ihrer Position innerhalb der xy-Ebene korrespondieren. Jede der Dichtungsanordnungen 42 weist ferner Dichtungen 423 auf, welche die Aussparungen 422 umlaufen und insbesondere elastisch sind. Wie am besten in der Schnittdarstellung in Figur 4C der Schnittebene A-A aus Figur 4B zu sehen ist, sind in der gezeigten ersten Ausführung der Erfindung die Dichtungen 423 und die elektrisch isolierende Schicht 421 einstückig aus dem gleichen elastischen Material, beispielsweise einem Silikon, ausgebildet. Dabei ist die Dichtung 423 beispielsweise in Form eines Dichtungswulstes, der die Versorgungsöffnung 412 der Bipolarplatte 41 dichtend umläuft, ausgeführt. Die elektrisch isolierende Schicht 421 und die Dichtung 423 sind bevorzugt mit einem Spritzgießverfahren direkt auf die Bipolarplatte aufgebracht, dass heißt angespritzt. Dabei wird eine stoffschlüssige Verbindung zwischen der Schicht 421 und der Bipolarplatte 41 unmittelbar während der Herstellung erzeugt.

Figur 5 zeigt eine Membran-Elektroden-Anordnung 50, die mit Vorteil zusammen mit einer erfindungsgemäßen Bipolarplatten-Dichtungsanordnung 40 in einem Brennstoffzellenstapel 1 verwendet werden kann. Die erfindungsgemäße Membran-Elektroden-Anordnung 50 weist eine hier nicht sichtbare Polymerelektrolytmembran sowie zwei beidseitig daran angeordnete katalytische Elektroden 51 auf. Es gelten hier die gleichen Ausführungen wie zu der herkömmlichen Membran-Elektroden-Anordnung 50' gemäß Figur 3. Das Gefüge aus Membran und katalytischen Elektroden 51 wird von einem Dichtungsrahmen 52 aus einem vorzugsweise elastischen Material umlaufend eingeschlossen. Der Dichtungsrahmen 52 bildet zudem eine Dichtung 53 aus, welche den aktiven Bereich mit den katalytischen Elektroden 51 umlaufend und fluiddichtend umgibt. Vorzugsweise ist der Rahmen 52 mit der Dichtung 53 durch einen Spritzgießprozess an das Membran-Elektroden-Gefüge angespritzt. Die erfindungsgemäße Membran-Elektroden-Anordnung 50 unterscheidet sich demnach von der herkömmlichen Anordnung gemäß Figur 3 dadurch, dass die beidseitigen Versorgungsabschnitte mit den Aussparungen 54 und den Dichtungen 55 für die Versorgungsöffnungen der Bipolarplatte nicht vorhanden sind. Lediglich die Dichtungsfunktion für den aktiven Bereich 51 verbleibt somit auf der erfindungsgemäßen Membran-Elektroden-Anordnung 50, während die Dichtungsfunktion für die Versorgungsöffnungen 412 auf die Bipolarplatten-Dichtungsanordnung 40 verlagert ist. Werden somit die Bipolarplatten-Dichtungsanordnungen 40 gemäß Figur 4 mit Membran-Elektroden-Anordnungen 50 gemäß Figur 5 abwechselnd zu einem Brennstoffzellenstapel 1 wie in Figur 1 gezeigt gestapelt, so erstrecket sich die Membran-Elektroden-Anordnung 50 im Wesentlichen lediglich über das Strömungsfeld 411 der Bipolarplatte 41, wobei die Dichtung 53 der Membran-Elektroden-Anordnung 50 das Strömungsfeld 411 dichtend umläuft und nach außen abdichtet. Gleichzeitig liegen die Dichtungen 423 einer Bipolarplatten-Dichtungsanordnung 40 an einer Bipolarplatte 41 einer anschließenden Bipolarplatten-Dichtungsanordnung an und dichten somit die Versorgungsöffnungen 412 gegeneinander ab.

Da in einem solchen erfindungsgemäßen Brennstoffzellenstapel 1 die Membran-Elektroden-Anordnungen 50 keine überstehenden und übermäßig flexiblen Versorgungsabschnitte wie in Figur 3 aufweisen, wird das Ausrichten und Stapeln der Komponenten 40, 50 zu einem Brennstoffzellenstapel 1 wesentlich erleichtert. Zudem werden die Probleme der thermischen Ausdehnung beziehungsweise Schrumpfung des Dichtungsrahmens der herkömmlichen Membran-Elektroden-Anordnung 50' weitgehend vermieden. Aufgrund der verringerten Komplexität der Dichtungsanordnung seitens der MEA kann zudem die Produktausbeute während des Umspritzens der MEA erhöht werden. Ferner besteht die Möglichkeit, Dichtungsmaterialien mit niedrigerer Viskosität zu verwenden und dadurch die Einspritzdrücke während des Umspritzens der Bipolarplatte 41 zu reduzieren, wodurch das Risiko von Rissen in der Bipolarplatte 41 reduziert und auch hier die Ausbeute erhöht wird.

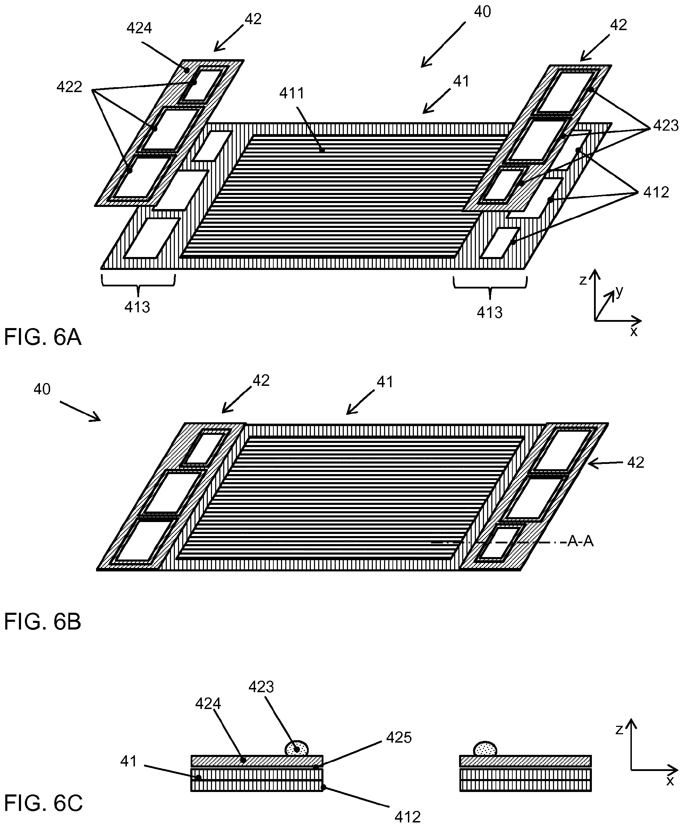

Figur 6 zeigt eine Bipolarplatten-Dichtungsanordnung 40 gemäß einer zweiten Ausführung der vorliegenden Erfindung. Dabei bezeichnen übereinstimmende Bezugszeichen wiederum die gleichen Elemente wie in Figur 4 und werden im Einzelnen nicht erneut erläutert.

Die Bipolarplatten-Dichtungsanordnung 40 gemäß der zweiten Ausgestaltung unterscheidet sich von der ersten dadurch, dass die elektrisch isolierende Schicht hier als eine Trägerfolie 424 ausgebildet ist und aus einem anderen Material als die Dichtungen 423 besteht. Beispielsweise kann die Trägerfolie 424 aus einem thermisch und chemisch beständigen thermoplastischen Kunststoff bestehen. Das Material sollte elektrisch isolierend sein und braucht jedoch nicht elastisch zu sein. Die Dichtungen 423 bestehen wie in dem ersten Ausführungsbeispiel aus einem elastischen Material, insbesondere einem Silikonmaterial. Die Dichtungen 423 sind bevorzugt auf die Trägerfolie 424 mittels eines Spritzgießverfahrens aufgebracht, wobei auch hier das LIM-Verfahren eingesetzt werden kann. Nach dem Spritzgießen wird die Trägerfolie 424 mittels einer Klebstoffverbindung 425 auf die nicht-aktiven Versorgungsbereiche 413 der Bipolarplatte 41 aufgebracht und mit dieser verbunden.

Die zweite Ausgestaltung ermöglicht, die Materialien für die Trägerfolie 424 und die Dichtung 423 entsprechend deren Funktionen zu optimieren.

Die Bipolarplatten-Dichtungsanordnung 40 gemäß der zweiten Ausgestaltung der Erfindung nach Figur 6 wird vorzugsweise mit der Membran-Elektroden-Anordnung 50 gemäß Figur 5 zu einem Brennstoffzellenstapel verbaut.

Gemäß einer nicht dargestellten Variante der zweiten Ausführungsform gemäß Figur 6 ist die Trägerfolie 424 auf ihren beiden Seiten mit umlaufenden Dichtungen 423 für jede der Aussparungen 422 beziehungsweise Versorgungsöffnungen 412 versehen. In diesem Beispiel wird die Trägerfolie 424 nicht mit der Bipolarplatte 41 verklebt. Vielmehr werden Bipolarplatte 41 und Dichtungsanordnung 42 lose aufeinander angeordnet und zusammen mit den Membran-Elektroden-Anordnungen 50 zu einem Brennstoffzellenstapel gestapelt.

### Bezugszeichenliste

- 1: Brennstoffzellenstapel
- 10: Einzelzelle
- 20: Anodenversorgung
- 21: Anodenversorgungspfad
- 22: Anodenabgaspfad
- 23: Brennstofftank
- 30: Kathodenversorgung
- 31: Kathodenversorgungspfad
- 32: Kathodenabgaspfad
- 33: Verdichter
- 40: Bipolarplatten-Dichtungsanordnung
- 40': Bipolarplatte gemäß Stand der Technik
- 41: Bipolarplatte
- 411: Strömungsfeld
- 412: Versorgungsöffnung
- 413: Versorgungsbereich
- 42: Dichtungsanordnung
- 421: elektrisch isolierende Schicht
- 422: Aussparung
- 423: Dichtung für Versorgungsöffnung
- 424: elektrisch isolierende Schicht / Trägerfolie
- 50: Membran-Elektroden-Anordnung
- 50': Membran-Elektroden-Anordnung gemäß Stand der Technik
- 51: katalytische Schicht / aktiver Bereich
- 52: Dichtungsrahmen
- 53: Dichtung für aktiven Bereich
- 54: Aussparung
- 55: Dichtung für Versorgungsöffnung

## Patentansprüche

1. Bipolarplatten-Dichtungsanordnung (40) für eine Brennstoffzelle (10), umfassend
- eine Bipolarplatte (41), aufweisend
- ein Strömungsfeld (411) für ein Reaktantenmedium auf zumindest einer ihrer Hauptseiten sowie
- zumindest zwei, jeweils seitlich benachbart zum Strömungsfeld (411) angeordnete Versorgungsbereiche (413), in denen Versorgungsöffnungen (412) zur Zu- und Abführung des Reaktantenmediums und optional zur Zu- und Abführung eines Kühlmittels angeordnet sind, und
- zumindest eine Dichtungsanordnung (42), aufweisend
- für jeden Versorgungsbereich (413) der Bipolarplatte (41) jeweils eine elektrisch isolierende Schicht (421, 424), die den Versorgungsbereich (413) zumindest abschnittsweise bedeckt und Aussparungen (422) aufweist, die mit den Versorgungsöffnungen (412) der Bipolarplatte (41) korrespondieren, sowie
- für jede Aussparung (422) eine diese umlaufende Dichtung (423), wobei die Dichtungsanordnung (42) keine das Strömungsfeld (411) der Bipolarplatte (41) umlaufende Dichtung aufweist.

2. Bipolarplatten-Dichtungsanordnung (40) nach Anspruch 1, **dadurch gekennzeichnet, dass** die elektrisch isolierende Schicht (421) und die Dichtung (423) der Dichtungsanordnung (42) aus dem gleichen Material bestehen.

3. Bipolarplatten-Dichtungsanordnung (40) nach Anspruch 2, **dadurch gekennzeichnet, dass** die elektrisch isolierende Schicht (421) und die Dichtung (423) der Dichtungsanordnung (42) einstückig ausgebildet sind.

4. Bipolarplatten-Dichtungsanordnung (40) nach Anspruch 2 oder 3, **dadurch gekennzeichnet, dass** die elektrisch isolierende Schicht (421) und die Dichtung (423) mit einem Spritzgießverfahren auf die Bipolarplatte (41) aufgebracht sind.

5. Bipolarplatten-Dichtungsanordnung (40) nach Anspruch 1, **dadurch gekennzeichnet, dass** die elektrisch isolierende Schicht (421, 424) eine mit der Dichtung (423) verbundene Trägerfolie (424) ist, wobei die Trägerfolie (424) vorzugsweise mittels eines Klebstoffs (425) mit der Bipolarplatte (41) befestigt ist.

6. Bipolarplatten-Dichtungsanordnung (40) nach Anspruch 5, **dadurch gekennzeichnet, dass** die Dichtung (423) mit einem Spritzgießverfahren auf die Trägerfolie (424) aufgebracht ist.

7. Brennstoffzellenstapel (1), umfassend
- zumindest zwei Bipolarplatten-Dichtungsanordnungen (40) nach einem der Ansprüche 1 bis 6 sowie
- jeweils eine sich zwischen zwei benachbarten Strömungsfeldern (411) zweier Bipolarplatten-Dichtungsanordnungen (40) erstreckende Membran-Elektroden-Anordnung (50).

8. Brennstoffzellenstapel (1) nach Anspruch 7, **dadurch gekennzeichnet, dass** sich die Membran-Elektroden-Anordnung (50) nicht über den Versorgungsbereich (413) der Bipolarplatten-Dichtungsanordnung (40) erstreckt.

9. Brennstoffzellenstapel (1) nach einem der Ansprüche 7 oder 8, **dadurch gekennzeichnet, dass** die Membran-Elektroden-Anordnung (50) eine das Strömungsfeld (411) der Bipolarplatten-Dichtungsanordnung (40) umlaufende Dichtung (53) aufweist, die insbesondere an die Membran-Elektroden-Anordnung (50) angeformt ist.

## Claims

1. Bipolar plate sealing arrangement (40) for a fuel cell (10) comprising
- a bipolar plate (41) having
- a current field (411) for a reactant medium on at least one of its major sides and
- at least two supply regions (413), arranged respectively laterally adjacent to the current field (411), in which supply openings (412) are arranged for supply and discharge of the reactant medium and optionally for the supply and discharge of a coolant, and
- at least one sealing arrangement (42) having
- for each supply area (413) of the bipolar plate (41) respectively one electrically insulating layer (421, 424) which covers the supply region (413) at least in sections and has recesses (422) which correspond to the supply openings (412) of the bipolar plate (41), and
- a peripheral seal (423) around each recess (422), wherein the sealing arrangement (42) has no peripheral seal surrounding the current field (411) of the bipolar plate (41).

2. Bipolar plate sealing arrangement (40) according to claim 1, **characterised in that** the electrically insulating layer (421) and the seal (423) of the sealing arrangement (42) are made of the same material.

3. Bipolar plate sealing arrangement (40) according to claim 2, **characterised in that** the electrically insulating layer (421) and the seal (423) of the sealing arrangement (42) are integrally formed.

4. Bipolar plate sealing arrangement (40) according to claim 2 or 3, **characterised in that** the electrically insulating layer (421) and the seal (423) are applied to the bipolar plate (41) by an injection moulding process.

5. Bipolar plate sealing arrangement (40) according to claim 1, **characterised in that** the electrically insulating layer (421, 424) is a carrier film (424) connected with the seal (423), wherein the carrier film (424) is preferably mounted by means of a bonding agent (425) to the bipolar plate (41).

6. Bipolar plate sealing arrangement (40) according to claim 5, **characterised in that** the seal (423) is applied to the carrier film (424) by means of an injection moulding process.

7. Fuel cell stack (1), comprising
- at least two bipolar plate sealing arrangements (40) according to any of claims 1 to 6 and
- respectively one membrane-electrode arrangement (50) extending between two adjacent current fields (411) of two bipolar plate sealing arrangements (40).

8. Fuel cell stack (1) according to claim 7, **characterised in that** the membrane-electrode arrangement (50) does not extend beyond the supply region (413) of the bipolar plate sealing arrangement (40).

9. Fuel cell stack (1) according to any one of claims 7 or 8, **characterised in that** the membrane electrode arrangement (50) has a peripheral seal (53) surrounding the bipolar plate sealing arrangement (40) of the current field (411), which is formed in particular on the membrane electrode arrangement (50).

## Revendications

1. Système d'étanchéité de plaques bipolaires (40) pour une pile à combustible (10), comprenant
- une plaque bipolaire (41), présentant
- un champ d'écoulement (411) pour un milieu de réactif sur au moins un de ses côtés principaux ainsi que
- au moins deux zones d'alimentation (413) agencées respectivement latéralement de manière contiguë au champ d'écoulement (411), dans lesquelles des ouvertures d'alimentation (412) sont agencées pour l'amenée et l'évacuation du milieu de réactif et facultativement pour l'amenée et l'évacuation d'un réfrigérant, et
- au moins un système d'étanchéité (42) présentant
- pour chaque zone d'alimentation (413) de la plaque bipolaire (41) respectivement une couche électriquement isolante (421, 424) qui recouvre la zone d'alimentation (413) au moins par sections et présente des évidements (422) qui correspondent aux ouvertures d'alimentation (412) de la plaque bipolaire (41), ainsi que
- pour chaque évidement (422) un joint d'étanchéité (423) l'entourant, dans lequel le système d'étanchéité (42) ne présente aucun joint d'étanchéité entourant le champ d'écoulement (411) de la plaque bipolaire (41).

2. Système d'étanchéité de plaques bipolaires (40) selon la revendication 1, **caractérisé en ce que** la couche électriquement isolante (421) et le joint d'étanchéité (423) du système d'étanchéité (42) se composent du même matériau.

3. Système d'étanchéité de plaques bipolaires (40) selon la revendication 2, **caractérisé en ce que** la couche électriquement isolante (421) et le joint d'étanchéité (423) du système d'étanchéité (42) sont réalisés d'un seul tenant.

4. Système d'étanchéité de plaques bipolaires (40) selon la revendication 2 ou 3, **caractérisé en ce que** la couche électriquement isolante (421) et le joint d'étanchéité (423) sont appliqués sur la plaque bipolaire (41) avec un procédé de moulage par injection.

5. Système d'étanchéité de plaques bipolaires (40) selon la revendication 1, **caractérisé en ce que** la couche électriquement isolante (421, 424) est un film support (424) relié au joint d'étanchéité (423), dans lequel le film support (424) est de préférence fixé au moyen d'une colle (425) à la plaque bipolaire (41).

6. Système d'étanchéité de plaques bipolaires (40) selon la revendication 5, **caractérisé en ce que** le joint d'étanchéité (423) est appliqué sur le film support (424) avec un procédé de moulage par injection.

7. Empilement de pile à combustible (1) comprenant
- au moins deux systèmes d'étanchéité de plaques bipolaires (40) selon l'une des revendications 1 à 6 ainsi que
- respectivement un système électrode-membrane (50) s'étendant entre deux champs d'écoulement (411) contigus de deux systèmes d'étanchéité de plaques bipolaires (40).

8. Empilement de pile à combustible (1) selon la revendication 7, **caractérisé en ce que** le système électrode-membrane (50) ne s'étend pas sur la zone d'alimentation (413) du système d'étanchéité de plaques bipolaires (40).

9. Empilement de pile à combustible (1) selon l'une des revendications 7 ou 8, **caractérisé en ce que** le système électrode-membrane (50) présente un joint d'étanchéité (53), entourant le champ d'écoulement (411) du système d'étanchéité de plaques bipolaires (40), qui est formé en particulier sur le système électrode-membrane (50).
